# NEW EUROPEAN PATENT SPECIFICATION

(11) **EP 2 503 905 B2**
(45) Date of publication and mention of the opposition decision: **29.03.2017**
(45) Mention of the grant of the patent: 23.04.2014
(21) Application number: 10785037.2
(22) Date of filing: 25.11.2010
(51) Int. Cl.: A23L 19/18, A23L 5/20, A23L 5/10

(54) **Method to produce fried vegetable products**
Verfahren zur Herstellung frittierten pflanzlicher Produkten
Méthode de production de produits végétaux frits

(30) Priority: 26.11.2009 EP 09177231
(43) Date of publication of application: 03.10.2012
(73) Proprietor: DSM IP Assets B.V., 6411 TE Heerlen (NL)
(72) Inventor: STREEKSTRA, Hugo, NL-1017 SP Amsterdam (NL)
(74) Representative: Kranenburg-van Dijk, Saskia
(86) International application number: PCT/EP2010/068175
(87) International publication number: WO 2011/064280

(56) References cited:
- WO-A1-2004/026043
- WO-A1-2005/082160
- WO-A1-2007/106996
- WO-A1-2010/070010
- WO-A2-2006/053563
- US-A1- 2004 101 607
- US-A1- 2007 141 225
- US-A1- 2007 178 219
- US-A1- 2007 190 208
- HENDRIKSEN HV, KORNBRUST BE, OSTERGAARD PR, STRINGER MA: "Evaluating the potential for enzymatic acrylamide mitigation in a range of food products using an asparaginase from Aspergillus oryzae", J. AGRIC. FOOD CHEM., vol. 57, 23 April 2009 (2009-04-23), pages 4168-4176, XP002575849,
- SANTINA ROMANI ET AL: "Effect of frying time on acrylamide content and quality aspects of French fries", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 226, no. 3, 6 February 2007 (2007-02-06), pages 555-560, XP019584960, ISSN: 1438-2385

## Description

### Field of the Invention

The present invention relates to the preparation of fried vegetable products. In particular, it relates to the preparation of fried vegetable products which have been subjected to an asparagines-reducing treatment before frying.

### Background of the Invention

Recently, the occurrence of acrylamide in a number of heated food products was published (Tareke et al. Chem. Res. Toxicol. 13, 517-522 (2000)). Since acrylamide is considered as probably carcinogenic for animals and humans, this finding had resulted in worldwide concern. Further research revealed that considerable amounts of acrylamide are detectable in a variety of baked, fried and oven prepared common foods and it was demonstrated that the occurrence of acrylamide in food was the result of the heating process.

A pathway for the formation of acrylamide from amino acids and reducing sugars as a result of the Maillard reaction has been proposed by Mottram et al. Nature 419:448 (2002). According to this hypothesis, acrylamide may be formed during the Maillard reaction. During baking and roasting, the Maillard reaction is mainly responsible for the colour, smell and taste. A reaction associated with the Maillard is the Strecker degradation of amino acids and a pathway to acrylamide was proposed. The formation of acrylamide became detectable when the temperature exceeded 120°C, and the highest formation rate was observed at around 170°C. When asparagine and glucose were present, the highest levels of acrylamide could be observed, while glutamine and aspartic acid only resulted in trace quantities. The official migration limit in the EU for acrylamide migrating into food from food contact plastics is set at 10 ppb (10 micrograms per kilogram). Although no official limit is yet set for acrylamide that forms during cooking, the fact that a lot of products exceed this value, especially cereals, bread products and potato or corn based products, causes concern.

Several plant raw materials are known to contain substantial levels of asparagine. In potatoes asparagine is the dominant free amino acid (940 mg/kg, corresponding with 40% of the total amino-acid content) and in wheat flour asparagine is present as a level of about 167 mg/kg, corresponding with 14% of the total free amino acids pool (Belitz and Grosch in Food Chemistry - Springer New York, 1999). The fact that acrylamide is formed mainly from asparagine (combined with reducing sugars) may explain the high levels acrylamide in fried, oven-cooked or roasted plant products. Therefore, in the interest of public health, there is an urgent need for food products that have substantially lower levels of acrylamide or, preferably, are devoid of it.

Several patent applications describe the production of food products such as French fries and potato chips, with reduced level of acrylamide by contacting an intermediate form of said food product with the enzyme asparaginase.

WO2004/047560 describes a method for reducing the level of acrylamide in a food product containing asparagines. This method comprises extracting a portion of asparagine from food material which extraction may be facilitated by the use of asparaginase, after which the food product is heated.

WO2005/082160 describes a process for the production of a food or feed product wherein the surface of an intermediate form of the product is treated with e.g. asparaginase and heated at a temperature of 100°C or higher.

WO2006/053563 describes a process for the production of a cooked vegetable food material, having reduced levels of acrylamide. In this process the vegetable food is treated with a cellulose enzyme, optionally in combination with, or followed by treatment with an asparagine-reducing enzyme.

WO2007/106996 describes a method of modifying a root vegetable product, comprising contacting the surface of the root vegetable product with an enzyme and drying the root vegetable product while contacting with the enzyme. The modification of the root vegetable product can comprise removal of asparagine in the vegetable product and the enzyme used is preferably asparaginase.

Suitable asparaginases for this purpose have been yielded from several fungal sources, as for example Aspergillus niger WO2004/030468 and Aspergillus oryzae WO04/032648. More recently asparaginases mutants and variants having improved properties have also been described. For example WO2008/10513 describes mutant asparaginases with improved thermotolerance and thermostability; WO2008/128975 describes asparaginases with broad pH optimum and high specific asparaginase activity; and WO2008/128974 describes asparaginases with a shifted pH optimum and/or increased specific asparaginase activity.

The application of asparaginase in the large scale production of fried vegetable products such as French fries or potato chips with reduced level of acrylamide is only feasible when the characteristics of the final products such as colour, taste and structural properties are reproducible and indistinguishable from products which have not been treated with asparaginase. The qualities of the fried product are also dependent on the quality of the oil used for frying the product intermediate. Therefore the use of asparaginase in the large scale production of fried vegetable products should not affect the quality of the frying oil to prevent loss of quality of the fried product and to allow reuse of the frying oil in the industrial process. Colour is widely used as index of oil quality and of the fried product quality. It is recognized that in the industrial production of fried vegetable products darkening or browning of the frying oil and/or of the fried vegetable product should be avoided.

It is therefore an object of the present invention, to provide a novel production process of fried vegetable product, having reduced levels of acrylamide, whilst maintaining the colour properties of the fried product and/or of the oil used in the production process, in order to obtain qualitatively good fried vegetable products.

### Description of the invention

The present invention relates to a method to minimize quality loss of frying oil during the production of a fried vegetable food product from an asparagine-containing vegetable raw material. Said method comprises:
a. contacting the surface of a vegetable material with an asparagine-reducing enzyme preparation, whereby enzyme product is produced due to the action of the asparagine-reducing enzyme with asparagine in the vegetable material;
b. reducing the amount of enzyme product present on the surface of the enzyme-treated vegetable material before frying by treatment with a diluting agent, wherein the diluting agent comprises water and wherein the diluting agent is an acidic diluting agent;
c. frying the enzyme-treated vegetable material in oil, by which a fried vegetable food product is obtained with a reduced level of acrylamide if compared with a corresponding fried vegetable product which has not been treated with asparagine-reducing enzyme.

The method according to the invention prevents or diminishes the darkening of the oil used for frying. This oil darkening is frequently observed after frying vegetable material treated with asparagine-reducing enzyme. Darkening of the oil may lead to a darkening of products subsequently fried in the darkened oil and also this product darkening is now prevented or diminished. This loss of oil quality may be apparent immediately or only after frying several batches of enzyme-treated vegetable material.

The vegetable material which is treated with the asparagine-reducing enzyme may be raw, cooked, blanched or already parfried.

The vegetable material may be any vegetable material. The method is very suitable for a vegetable selected from a stem vegetable, a root vegetable, a tuber vegetable, a bulb vegetable, or a mixture of two or more of said vegetables. Preferably the vegetable is a tuber, more preferably the tuber is a potato. The fried vegetable product which is produced may be any fried vegetable product. Preferably, it is a food product. Suitable examples of fried vegetable food products include French fries and potato chips.

The vegetable may have any form, for example sliced, strips or wedged.

In the present contex, the term 'frying' refers to cooking in hot oil. The frying oil may be any animal, plant or mineral oil. Preferably, food grade oil is used. Suitable examples include sun flour oil, olive oil, rape seed oil, canola oil, peanut oil, safflower oil, soybean oil or palm oil.

The obtained fried vegetable product has a reduced level of acrylamide if compared with a corresponding fried vegetable product which has not been treated with asparagine-reducing enzyme. Preferably, the obtained fried vegetable product comprises at least 10% less acrylamide than a corresponding fried vegetable product which has not been treated with asparagine-reducing enzyme. To obtain this result, the vegetable material is contacted with the asparagine-reducing enzyme. Typically, the surface of the vegetable material is contacted with an asparagine-reducing enzyme preparation. In one embodiment, the contact with the asparagine-reducing enzyme preparation occurs by immersing the vegetable product in the enzyme preparation. In another embodiment, the contacting with the asparagine-reducing enzyme preparation occurs by coating with the enzyme preparation, preferably by spraying the enzyme preparation on the surface of the vegetable material.

The asparagine-reducing enzyme may be any asparagine-reducing enzyme known in the art. Preferably, it is an asparaginase. In this context, the term 'asparaginase' refers to an enzyme within EC 3.5.1.1.and may be obtained from any suitable source, such as for example from plants, animals or microorganisms. Preferably, the asparaginase is a microbial asparaginase, such as for example from *Escherichia, Erwinia, Streptomyces, Pseudomonas, Aspergillus* or *Baccillus* species. An example of a suitable *Escherichia* strain is *Escherichia coli.* An example of a suitable *Erwinia* strain is *Erwinia chrysanthemi.* Examples of suitable *Streptomyces* strains are *Streptomyces lividans* or *Streptomyces murinus.* Examples of suitable *Aspergillus* strains are *Aspergillus oryzae, Aspergillus nidulans* or *Aspergillus niger*. Examples of suitable *Bacillus* strains are *Bacillus alkalophilus, Bacillus amyloliquefaciens, Bacillus brevis, Bacillus circulans, Bacillus coagulans, Bacillus lautus, Bacillus lentus, Bacillus licheniformis, Bacillus megateruim, Bacillus stearothemophilus, Bacillus subtilis* or *Bacillus thuringiensis.* An example of suitable methods to yield asparaginase from *Bacillus, Streptomyces, Escherichia* or *Pseudomonas* strains is described in WO 03/083043.

The asparagine-reducing enzyme may be a naturally purified product, a product of chemical synthetic procedures or a product produced by recombinant techniques from a prokaryotic or eukaryotic host. Depending upon the host employed in a recombinant production procedure, the asparagine-reducing enzyme may be glycosylated or non-glycosylated.

Without wishing to be bound by any theory, the inventor believes that due to the action of the asparagine-reducing enzyme, one or more enzyme products are formed which contribute, directly or indirectly, to the darkening of the oil used for frying and to the browning of products subsequently fried in the darkened oil. One enzyme product which is typically formed if vegetable material is treated with an asparagine-reducing enzyme is ammonia. Reducing the amount of ammonia on the surface of the enzyme-treated vegetable material will lead to a reduction of the amount of ammonia which is introduced in the oil used for frying and will contribute to the preservation of the colour of the frying oil and of subsequently fried products. Therefore, in one embodiment, the method according the invention comprises reducing the amount of ammonia present on the surface of vegetable material treated with asparagine-reducing enzyme before frying.

Any significant reduction of enzyme product on the surface of the vegetable material before frying will diminish darkening of the frying oil. In this context, the term 'surface' typically refers to the outer surface of the vegetable material or to any surface created which is (subsequently) exposed to the frying oil. Preferably, the amount of enzyme product is reduced by at least 5%, 10%, 15%, 20%, 25% or 30%. More preferably, the amount of enzyme product is reduced by at least 35%, 40%, 45%, 50%, 55%, 60%, 65%, 70% or 75%. Most preferably, the amount of enzyme product is reduced by at least 80%, 85%, 90%, 95%, 98% or 99%.

The amount of enzyme product on the surface of the enzyme-treated vegetable material may be reduced before frying using any method known in the art. In one embodiment, the amount of enzyme product on the surface of the enzyme-treated vegetable material is reduced by diluting the fluid which is present on the surface of the enzyme-treated vegetable material. A suitable way of doing this is by spraying with or dipping in an acidic diluting agent. Spraying allows for a more economical use of water than dipping, since dipping requires at least about one liter diluting agent per kilogram vegetable material. Functional compounds, such as food grade acids, including citric acid, lactic acid, malic acid, acetic acid; phosphoric acid; salts, phosphate and pyrophosphate, at acidic pH; may be added to the diluting agent. A suitable diluting agent is fresh water with added functional compounds.

Preferably, after dilution, pending fluid with dissolved enzyme products is removed from the vegetable material to prevent dissolved substances from settling on the treated vegetable surface, and the vegetable material is dried. Blotting or air blowing are the preferred ways of drying because in that way dissolved enzyme products are removed while drying.

In an alternative, the amount of enzyme product on the surface of the enzyme-treated vegetable material is reduced by acidification of the enzyme preparation. By using an acidified enzyme preparation, the enzyme product formed on the enzyme-treated vegetable material is acidified to a species which does not stimulate the browning as much as the enzyme product. For example, ammonia is converted to the ammonium ion. Commercial enzyme preparations are typically in concentrated form and have to be diluted before use. In such alternative, the enzyme preparation is diluted with an acidic dilution agent. A suitable acidic diluton agent is water to which a food grade acid, such as citric acid, lactic acid, malic acid, phosphoric acid or acetic acid is added, or to which phosphate or pyrophosphate at acidic pH is added. The pH of the diluted enzyme preparation is suitably between pH 3 and 5. Preferably, the pH of the diluted enzyme preparation is between 4 and 5. More preferably, the pH of the diluted enzyme preparation is about pH 4.5.

The enzyme-treated vegetable material is typically dried before frying, for instance by blotting or air blowing.

In another ascept, the present invention relates to a method to produce a fried vegetable food product from an asparagine-containing vegetable material comprising:
a. contacting the surface of a vegetable material with an asparagine-reducing enzyme preparation, whereby enzyme product is produced due to the action of the asparagine-reducing enzyme with asparagine in the vegetable material;
b. reducing the amount of enzyme product present on the surface of the enzyme-treated vegetable material before frying by treatment with an acidic diluting agent;
c. frying the enzyme-treated vegetable material in oil, by which a fried vegetable food product is obtained with a reduced level of acrylamide if compared with a corresponding fried vegetable product which has not been treated with asparagine-reducing enzyme.

In another aspect, the present invention relates to an asparagine-reducing enzyme preparation which reduces, minimizes or prevents browning of the frying oil by acidifying the enzyme product formed due to the action of asparagine-reducing enzyme to a species which does not stimulate browning as much as the enzyme product. This asparagine-reducing enzyme preparation comprises asparagine-reducing enzyme in an aqueous solution with a pH between 3 and 4.5. In this enzyme preparation, asparagine-reducing enzyme is present in a strength of between about 0.1 and 100 ASPU/g, more preferably in a strength of between about 0.1 and 50 ASPU/g or between 0.1 and 25 ASPU/g. Most preferably, asparagine-reducing enzyme is present in a strength of between about 0.1 and 10 ASPU/g. In the context of the present invention, 1 ASPU is defined as the amount of asparaginase that liberates one micromole of ammonia from L-asparagine at pH 5.0 and 37°C. Asparaginase activity (in ASPU units) is determined by measuring the rate of hydrolysis of L-asparagine to L-aspartic acid and ammonia at pH 5.0 and 37°C. The liberated ammonia subsequently reacts with phenol nitroprusside and alkaline hypochlorite resulting in a blue color (Berthelot reaction). The activity of asparaginase is determined by measuring absorbance of the reaction mixture at 600 nm. The asparagine-reducing enzyme preparation according to the invention may contain functional compounds, such as food grade acids, including citric acid, lacitic acid, malic acid, acetic acid; salts; phosphate and pyrophosphate, preferably at acidic pH. The asparagine-reducing enzyme preparation according to the invention will preserve the colour of oil which is used for frying enzyme-treated vegetable material by diminishing the browning of the frying oil and therefore the browning of material subsequently fried in the oil.

In another aspect, the present invention relates to the use of an asparagine-reducing enzyme preparation which reduces, minimizes or prevents browning of the oil which is used for frying enzyme-treated vegetable material. In a preferred embodiment, the asparagine-reducing enzyme preparation used comprises asparagine-reducing enzyme in an aqueous solution with a pH between 3 and 5. Preferably, in an aqueous solution with a pH between 4 and 5. More preferably, in an aqueous solution with a pH of about 4.5. In this enzyme preparation, asparagine-reducing enzyme is present in a strength of between about 0.1 and 100 ASPU/g, more preferably in a strength of between about 0.1 and 50 ASPU/g or between 0.1 and 25 ASPU/g. Most preferably, asparagine-reducing enzyme is present in a strength of between about 0.1 and 10 ASPU/g.

### EXAMPLES

### Materials & Methods

- Asparagine-reducing enzyme used was the commercially available Preventase M (DSM Food Specialties) asparaginase, with a strength of 2500 ASPU/ g powder (maltodextrin).
- Potato wedges used were the commercial product of Albert Heijn, the Netherlands);
- The colour of the oil samples was determined by measuring the absorption at 400 nm with a Spectrophotometer;
- Oil quality was analysed by measuring aldehyde levels by NMR spectroscopy;

### Example 1 Darkening of the frying oil (comparative example)

9 kg of potato wedges were divided into portions of approximately 1.8 kg. Each portion was immersed in 1.35 kg of an enzyme solution of 1g asparaginase per L water. The immersed potato wedges were incubated for 30 minutes at 30°C under gentle shaking (80 rpm). After the incubation there was an increase of the weight of the potato wedges of 5-7%. After the enzyme treatment, the potato wedges were dried with circulating air of approximately 50°C. After drying the potato wedges were stored in the fridge for 18 h. 400 g portions of the wedges were parfried for 4 minutes at 140 C in 14 L high-oleic acid rapeseed oil in a Delonghi deep fryer. To investigate the effect of frying on the quality of the oil and the product, subsequent batches were fried in the same oil. After 6-8 batches, 150 g fresh oil was added to compensate for the decreased oil volume. The effect of frying successive charges of asparaginase-treated potato wedges on the colour of the frying oil was measured and results are shown in Table 1.

### Example 2 Darkening of the frying oil

9 kg of potato wedges were divided into portions of approximately 1.8 kg. and incubated with asparagine-reducing enzyme as described in Example 1. After the enzyme treatment, the 1.8 kg portions of potato wedges were immersed in 3.5 L fresh water. Then, the potato wedges were dried with circulating air of approximately 50°C. After drying the potato wedges were stored and fried as in Example 1. After 6-8 batches, 150 g fresh oil was added to compensate for the decreased oil volume. At several points during the frying of subsequent batches, samples were drawn from the oil. The effect of frying successive charges of asparaginase-treated potato wedges on the colour of the frying oil was measured and results are shown in Table 1.

The results show that the enzyme-treated potato wedges from Example 1, which were not immersed in water after enzyme treatment, cause a much stronger increase in the oil colour than the potato wedges from Example 2, which were immersed in water after enzyme treatment.

**Table 1.**

| charge | Example 1 | Example 2 |
|---|---|---|
| | | |
| 0 | 0.4399 | 0.4399 |
| 3 | 0.5941 | 0.5097 |
| 6 | 0.6259 | 0.5219 |
| 9 | 0.6595 | 0.5413 |
| 12 | 0.7317 | 0.5586 |
| 15 | 0.7887 | 0.5831 |
| 18 | 0.8804 | 0.5942 |
| 21 | 0.9174 | 0.6077 |

### Example 3 Aldehyde levels of frying oil

These colour changes could be related to the aldehyde levels of the frying oil: the brownest oils also had the highest aldehyde levels, indicating oxidative damage to the oil. Table 2 shows aldehyde levels (in g/kg) of frying oil after frying of successive charges of potato wedges. The results show that after 21 charges, aldehyde levels are higher if no dilution step is introduced between enzyme treatment and frying.

**Table 2**

| charge | No dilution step | Dilution with water |
|---|---|---|
| 0 | 0.00 | 0.00 |
| 21 | 0.09 | 0.04 |

## Claims

1. Method to minimize quality loss of frying oil during the production of a fried vegetable food product from an asparagine-containing vegetable raw material, which method comprises:
a. contacting the surface of a vegetable material with an asparagine-reducing enzyme preparation, whereby enzyme product is produced due to the action of the asparagine-reducing enzyme with asparagine in the vegetable material;
b. reducing the amount of enzyme product present on the surface of the enzyme-treated vegetable material before frying by treatment with a diluting agent, wherein the diluting agent comprises water and wherein the diluting agent is an acidic diluting agent;
c. frying the enzyme-treated vegetable material in oil, by which a fried vegetable food product is obtained with a reduced level of acrylamide if compared with a corresponding fried vegetable product which has not been treated with asparagine-reducing enzyme.

2. Method according to claim 1 wherein the vegetable material is raw, cooked, blanched or parfried.

3. Method according to any one of claims 1-2 wherein the diluting agent has a pH between 3 and 5.

4. Method according to any one of claims 1 to 3 wherein the acidic diluting agent comprises a food grade acid, preferably wherein the food grade acid comprises citric acid, lactic acid, malic acid, acetic acid and/or phosphoric acid.

5. Method according to any one of the preceeding claims wherein the treatment with a diluting agent comprises spraying or dipping the vegetable material with or in the diluting agent.

6. Method according to any one of the preceeding claims, wherein the vegetable material is derived from a vegetable selected from a stem vegetable, a root vegetable, a tuber vegetable, a bulb vegetable, or it is a mixture of two or more of said vegetables, preferably the vegetable material is a tuber, more preferably the tuber is a potato product.

7. Method according to any one of the preceeding claims wherein the fried vegetable product is French fries or potato chips.

8. Method according to any one of the preceeding claims wherein the vegetable material is in sliced, stripped or wedged form.

9. Method according to any one of the preceding claims wherein the fried vegetable product comprises at least 10% less acrylamide than a corresponding fried vegetable product which has not been treated with asparagine-reducing enzyme.

10. Method to produce a fried vegetable food product from an asparagine-containing vegetable raw material comprising:
a. contacting the surface of a vegetable material with an asparagine-reducing enzyme preparation, whereby enzyme product is produced due to the action of the asparagine-reducing enzyme with asparagine in the vegetable material;
b. reducing the amount of enzyme product present on the surface of the enzyme-treated vegetable material before frying by treatment with an acidic diluting agent;
c. frying the enzyme-treated vegetable material in oil, by which a fried vegetable food product is obtained with a reduced level of acrylamide if compared with a corresponding fried vegetable product which has not been treated with asparagine-reducing enzyme.

11. Method according to claim 10 wherein the vegetable material is raw, cooked, blanched or parfried.

12. Method according to claim 10 or 11 wherein the acidic diluting agent has a pH between 3 and 5.

13. Method according to any one of claims 10-12 wherein the acidic diluting agent comprises a food grade acid, preferably wherein the food grade acid comprises citric acid, lactic acid, malic acid, acetic acid and/or phosphoric acid.

14. Asparagine-reducing enzyme preparation for preservation of the colour of oil used for frying vegetable material treated with asparagine-reducing enzyme, comprising asparagine reducing enzyme in an aqueous solution with a pH between 3 and 4.5 wherein the enzyme preparation has a strength of 0.1-100 ASPU/g.

15. Use of an asparagine-reducing enzyme preparation having a pH between 3 and 5 and a strength of 0.1-100 ASPU/g for preservation of the colour of oil used for frying vegetable treated with asparagine-reducing enzyme.

## Patentansprüche

1. Verfahren zum Minimieren des Qualitätsverlusts von Frittieröl während der Herstellung eines frittierten pflanzlichen Nahrungsmittels aus einem asparaginhaltigen pflanzlichen Rohmaterial, wobei das Verfahren Folgendes umfasst:
a. Inkontaktbringen der Oberfläche eines pflanzlichen Materials mit einem asparaginreduzierenden Enzympräparat, wobei aufgrund der Einwirkung des asparaginreduzierenden Enzyms auf Asparagin in dem pflanzlichen Material Enzymprodukt gebildet wird;
b. Reduzieren der Menge an auf der Oberfläche des enzymbehandelten pflanzlichen Materials vorliegenden Enzymprodukts vor dem Frittieren mittels Behandlung mit einem Verdünnungsmittel, wobei das Verdünnungsmittel Wasser umfasst und wobei es sich bei dem Verdünnungsmittel um ein saures Verdünnungsmittel handelt;
c. Frittieren des enzymbehandelten pflanzlichen Materials in Öl, wodurch man zu einem frittierten pflanzlichen Nahrungsmittel mit einer im Vergleich zu einem entsprechenden frittierten pflanzlichen Nahrungsmittel, das nicht mit asparaginreduzierendem Enzym behandelt worden ist, verringerten Acrylamidgehalt gelangt.

2. Verfahren nach Anspruch 1, wobei das pflanzliche Material roh, gegart, blanchiert oder vorfrittiert ist.

3. Verfahren nach einem der Ansprüche 1-2, wobei das Verdünnungsmittel einen pH-Wert zwischen 3 und 5 aufweist.

4. Verfahren nach einem der Ansprüche 1 bis 3, wobei das saure Verdünnungsmittel eine Säure in Lebensmittelqualität umfasst, vorzugsweise wobei die Säure in Lebensmittelqualität Citronensäure, Milchsäure, Äpfelsäure, Essigsäure und/oder Phosphorsäure umfasst.

5. Verfahren nach einem der vorhergehenden Ansprüche, wobei das Behandeln mit einem Verdünnungsmittel das Besprühen oder Eintauchen des pflanzlichen Materials mit dem bzw. in das Verdünnungsmittel umfasst.

6. Verfahren nach einem der vorhergehenden Ansprüche, wobei das pflanzliche Material von einem Gemüse, ausgewählt aus einem Stengelgemüse, einem Wurzelgemüse, einem Knollengemüse, einem Zwiebelgemüse stammt oder eine Mischung von zwei oder mehr dieser Gemüse darstellt, vorzugsweise wobei es sich bei dem pflanzlichen Material um eine Knolle handelt, wobei die Knolle stärker bevorzugt ein Kartoffelprodukt ist.

7. Verfahren nach einem der vorhergehenden Ansprüche, wobei es sich bei dem frittierten pflanzlichen Produkt um Pommes frites oder Kartoffelchips handelt.

8. Verfahren nach einem der vorhergehenden Ansprüche, wobei das pflanzliche Material in Scheibenform, in Stäbchenform oder in Form von Schnitzen vorliegt.

9. Verfahren nach einem der vorhergehenden Ansprüche, wobei das frittierte pflanzliche Produkt mindestens 10% weniger Acrylamid als ein entsprechendes frittiertes pflanzliches Produkt, das nicht mit asparaginreduzierendem Enzym behandelt worden ist, umfasst.

10. Verfahren zur Herstellung eines frittierten pflanzlichen Nahrungsmittels aus einem asparaginhaltigen pflanzlichen Rohmaterial, das Folgendes umfasst:
a. Inkontaktbringen der Oberfläche eines pflanzlichen Materials mit einem asparaginreduzierenden Enzympräparat, wobei aufgrund der Einwirkung des asparaginreduzierenden Enzyms auf Asparagin in dem pflanzlichen Material Enzymprodukt gebildet wird;
b. Reduzieren der Menge an auf der Oberfläche des enzymbehandelten pflanzlichen Materials vorliegenden Enzymprodukts vor dem Frittieren mittels Behandlung mit einem Verdünnungsmittel,
c. Frittieren des enzymbehandelten pflanzlichen Materials in Öl, wodurch man zu einem frittierten pflanzlichen Nahrungsmittel mit einer im Vergleich zu einem entsprechenden frittierten pflanzlichen Nahrungsmittel, das nicht mit asparaginreduzierendem Enzym behandelt worden ist, verringerten Acrylamidgehalt gelangt.

11. Verfahren nach Anspruch 10, wobei das pflanzliche Material roh, gegart, blanchiert oder vorfrittiert ist.

12. Verfahren nach Anspruch 10 oder 11, wobei das saure Verdünnungsmittel einen pH-Wert zwischen 3 und 5 aufweist.

13. Verfahren nach einem der Ansprüche 10-12, wobei das saure Verdünnungsmittel eine Säure in Lebensmittelqualität umfasst, vorzugsweise wobei die Säure in Lebensmittelqualität Citronensäure, Milchsäure, Äpfelsäure, Essigsäure und/oder Phosphorsäure umfasst.

14. Asparaginreduzierendes Enzympräparat für die Konservierung der Farbe von Öl, das für das Frittieren von mit asparaginreduzierendem Enzym behandelten pflanzlichen Material verwendet wird, umfassend asparagin-reduzierendes Enzym in einer wässrigen Lösung mit einem pH-Wert zwischen 3 und 4,5, wobei das Enzympräparat eine Stärke von 0,1-100 ASPU/g aufweist.

15. Verwendung eines asparaginreduzierenden Enzympräparats mit einem pH-Wert zwischen 3 und 5 und einer Stärke von 0,1-100 ASPU/g für die Konservierung der Farbe von Öl, das für das Frittieren von mit asparaginreduzierendem Enzym behandelten Gemüse verwendet wird.

## Revendications

1. Méthode destinée à minimiser la perte de qualité d'huile de friture pendant la production d'un produit alimentaire végétal frit à partir d'une matière première végétale contenant de l'asparagine, laquelle méthode comprend :
a. la mise en contact de la surface d'une matière végétale avec une préparation enzymatique de réduction d'asparagine, ce par quoi un produit enzymatique est produit suite à l'action de l'enzyme de réduction d'asparagine avec l'asparagine dans la matière végétale ;
b. la réduction de la quantité de produit enzymatique présent à la surface de la matière végétale traitée par l'enzyme avant la friture par un traitement par un agent de dilution, où l'agent de dilution comprend de l'eau et où l'agent de dilution est un agent de dilution acide ;
c. la friture de la matière végétale traitée par l'enzyme dans de l'huile, ce par quoi on obtient un produit alimentaire végétal frit ayant un taux réduit en acrylamide par rapport à un produit végétal frit correspondant n'ayant pas été traité par une enzyme de réduction d'asparagine.
²

2. Méthode selon la revendication 1, dans laquelle la matière végétale est crue, cuite, blanchie ou partiellement frite.

3. Méthode selon l'une quelconque des revendications 1-2, dans laquelle l'agent de dilution possède un pH compris entre 3 et 5.

4. Méthode selon l'une quelconque des revendications 1 à 3, dans laquelle l'agent de dilution acide comprend un acide de qualité alimentaire, préférablement où l'acide de qualité alimentaire comprend de l'acide citrique, de l'acide lactique, de l'acide malique, de l'acide acétique et/ou de l'acide phosphorique.

5. Méthode selon l'une quelconque des revendications précédentes, dans laquelle le traitement par un agent de dilution comprend la pulvérisation par, ou le trempage de la matière végétale dans, l'agent de dilution.

6. Méthode selon l'une quelconque des revendications précédentes, dans laquelle la matière végétale est dérivée d'un légume choisi parmi un légume de type tige, un légume de type racine, un légume de type tubercule, un légume de type bulbe, ou il s'agit d'un mélange de deux, ou plus, desdits légumes, préférablement la matière végétale est un tubercule, plus préférablement le tubercule est un produit de pomme de terre.

7. Méthode selon l'une quelconque des revendications précédentes, dans laquelle le produit végétal frit est une pomme frite ou une pomme chips.

8. Méthode selon l'une quelconque des revendications précédentes, dans laquelle la matière végétale est sous forme de tranches, de bâtonnets ou de quartiers.

9. Méthode selon l'une quelconque des revendications précédentes, dans laquelle le produit végétal frit comprend au moins 10% en moins d'acrylamide par rapport à un produit végétal frit correspondant n'ayant pas été traité par une enzyme de réduction d'asparagine.

10. Méthode de production d'un produit alimentaire végétal frit à partir d'une matière première végétale contenant de l'asparagine, comprenant :
a. la mise en contact de la surface d'une matière végétale avec une préparation enzymatique de réduction d'asparagine, ce par quoi un produit enzymatique est produit suite à l'action de l'enzyme de réduction d'asparagine avec l'asparagine dans la matière végétale ;
b. la réduction de la quantité de produit enzymatique présent à la surface de la matière végétale traitée par l'enzyme avant la friture par un traitement par un agent de dilution acide ;
c. la friture de la matière végétale traitée par l'enzyme dans de l'huile, ce par quoi on obtient un produit alimentaire végétal frit ayant un taux réduit en acrylamide par rapport à un produit végétal frit correspondant n'ayant pas été traité par une enzyme de réduction d'asparagine.

11. Méthode selon la revendication 10, dans laquelle la matière végétale est crue, cuite, blanchie ou partiellement frite.

12. Méthode selon la revendication 10 ou 11, dans laquelle l'agent de dilution acide possède un pH compris entre 3 et 5.

13. Méthode selon l'une quelconque des revendications 10-12, dans laquelle l'agent de dilution acide comprend un acide de qualité alimentaire, préférablement où l'acide de qualité alimentaire comprend de l'acide citrique, de l'acide lactique, de l'acide malique, de l'acide acétique et/ou de l'acide phosphorique.

14. Préparation enzymatique de réduction d'asparagine pour la conservation de la couleur de l'huile utilisée pour la friture de matière végétale traitée par une enzyme de réduction d'asparagine, comprenant l'enzyme de réduction d'asparagine dans une solution aqueuse avec un pH compris entre 3 et 4,5, dans laquelle la préparation enzymatique possède une activité de 0,1-100 ASPU/g.

15. Utilisation d'une préparation enzymatique de réduction d'asparagine, possédant un pH compris entre 3 et 5 et une activité de 0,1-100 ASPU/g, pour la conservation de la couleur de l'huile utilisée pour la friture de légumes traités par une enzyme de réduction d'asparagine.
